Europäisches Patentamt

European Patent Office

Office européen des brevets

(11) Publication number: **0 407 157 A2**

# EUROPEAN PATENT APPLICATION

(21) Application number: 90307286.6

(22) Date of filing: 03.07.90

(51) Int. Cl.5: **C08G 59/22**, C08G 59/32, C08G 59/54, C08L 63/00, C08K 3/00, C08K 7/02

(30) Priority: 03.07.89 JP 171705/89
03.07.89 JP 171706/89

(43) Date of publication of application:
09.01.91 Bulletin 91/02

(84) Designated Contracting States:
DE FR GB IT NL

(71) Applicant: MITSUI PETROCHEMICAL
INDUSTRIES, LTD.
2-5, Kasumigaseki 3-chome Chiyoda-ku
Tokyo(JP)

(72) Inventor: Tomoshige, Toru, c/o Mitsui
Petrochemical Ind. Ltd
2-5 Kasumigaseki 2-chome
Chiyoda-ku, Tokyo(JP)
Inventor: Manome, Atsushi, c/o Mitsui
Petrochemical Ind. Ltd
2-580-32 aza Taku, Nagaura, Sodegaura-cho
Kimitsu-shi, Chiba-ken(JP)
Inventor: Fujii, Yasumasa, c/o Mitsui
Petrochemical Ind. Ltd
2-580-32 aza Taku, Nagaura, Sodegaura-cho
Kimitsu-shi, Chiba-ken(JP)
Inventor: Suzuki, Youhei, c/o Mitsui
Petrochemical Ind. Ltd
2-580-32 aza Taku, Nagaura, Sodegaura-cho
Kimitsu-shi, Chiba-ken(JP)
Inventor: Sato, Norikazu, c/o NEC
Environment Eng., Ltd.
1-4-28 Mita
Minato-ku, Tokyo(JP)
Inventor: Saijo, Hidehiko, c/o NEC
Environment Eng., Ltd.
1-4-28 Mita
Minato-ku, Tokyo(JP)
Inventor: Nakazawa, Yoshinori, c/o NEC
Environment Eng., Ltd
1-4-28 Mita
Minato-ku, Tokyo(JP)

(74) Representative: Cresswell, Thomas Anthony
et al
J.A. Kemp & Co. 14 South Square Gray's
InnInn
London WC1R 5LX(GB)

(54) Vibration-damping material.

(57) A vibration-damping composition comprising epoxy resin (s), curing agent and filler can be applied to substrates and cured to form a vibration-damping material.

## VIBRATION-DAMPING MATERIAL

### Background of the Invention

(1) Filed of the Invention

The present invention relates to a vibration-damping material for absorbing vibrations generated in a motor of a machine and in the vicinity thereof or in an engine of a vehicle and in the vicinity thereof. More particularly, the present invention relates to a vibration-damping material having excellent vibration-damping performances, which comprises an epoxy resin as a basic component.

(2) Description of the Related Art

As the means for preventing transmission of vibrations generated by an operation of a vibration source such as a motor of a machine or an engine of a vehicle to other portions, there has heretofore been adopted a method in which a vibration damper such as a vibration-damping rubber or an air spring is disposed in a contact portion between the vibration source and other portion.

According to this method, transmission of vibrations can be prevented, but attenuation of vibrations per se of the vibration source cannot be expected. Accordingly, there has been adopted a method in which a vibration damper is disposed closely to a vibrating member to attenuate vibrations. According to this method, it is intended to convert vibration energy to thermal energy by the vibration damper. For the vibration damper used in this method, a composition comprising a polyamide, polyvinyl chloride or epoxy resin as a main component and various fillers incorporated therein has heretofore been used. Among these resins, polyamide and polyvinyl chloride resins are formed into rigid moldings. However, if it is intended to apply a moldings of this type as a vibration damper to a vibration-generating apparatus, the moldings is hardly fitted to a complicated configuration of the apparatus. Moreover, known vibration dampers composed of epoxy resins are not completely satisfactory in vibration-damping performances.

### Summary of the Invention

The present invention is to improve the foregoing problems of the conventional techniques and is characterized in that a composition comprising a specific epoxy resin is used as the vibration-damping material.

More specifically, in accordance with a first aspect of the present invention, there is provided a vibration-damping material having excellent vibration-damping effects, which comprises an epoxy resin which is diglycidyl ether or triglycidyl ether of a branched polyol having 3 to 20 carbon atoms or a polymer thereof and a curing agent, the total amount of the epoxy resin and curing agent being 100 parts by weight, and, incorporated therein, at least one component selected from the group consisting of 50 to 500 parts by weight of a scaly filler, 0.5 to 200 parts by weight of a particulate filler and 0.5 to 100 parts by weight of a fibrous material.

If up to 300 parts by weight of a plasticizer is incorporated in this vibration-damping material, the vibration-damping effects are further improved.

In accordance with a second aspect of the present invention, there is provided a vibration-damping material having excellent vibration-damping effects which comprises (a) an epoxy resin which is a diglycidyl ether or triglycidyl ether or a branched polyol having 3 to 20 carbon atoms or a polymer thereof, (b) a solid epoxy resin, (c) a curing agent, (d) a plasticizer and (e) a filler.

In general, a vibration damper is attached to a vibrating position of a vibrating member such as a beam or face, and vibrations generated at this position are attenuated by giving a damping to the vibrations. The loss coefficient (n) of the primary bending vibration of a strip-shaped board compound with a vibration a damper of the non-restriction type is given by the following equation:

2

$$\eta \doteqdot 3\,\eta_2\ \frac{Y_2 H_2}{Y_1 H_1}\ (1\ +\ \frac{H_2}{H_1}\ )^2$$

wherein $\eta$ represents the loss coefficient of the combined board, $\eta_2$ represents the loss coefficient of the vibration damper, $Y_1$ represents the Young's modulus of the board, $Y_2$ represents the Young's modulus of the vibration damper, $H_1$ represents the thickness of the board, and $H_2$ represents the thickness of the vibration damper.

From the above equation, it is obvious that when a vibration damper having a certain thickness $H_2$ is attached to a board having a Young's modulus $Y_1$ and a thickness $H_1$, the loss coefficient of the combined board is proportional to the loss coefficient and Young's modulus of the vibration damper. Namely, in view of vibration-damping performances, it is preferred that the vibration damper should have a high Young's modulus and a large loss coefficient over a wide temperature range and a wide frequency range.

Furthermore, the vibration damper is required to have large economical advantages, a good workability and a good adhesion to a vibration source, and it is also required that the vibration damper should be excellent in durability characteristics such as water resistance, oil resistance and weatherability.

The vibration-damping material of the present invention comprises as the main component an epoxy resin which is a diglycidyl ether or triglycidyl ether of a branched polyol having 3 to 20 carbon atoms or a polymer thereof, and excellent vibration-damping performances can be attained by incorporating a filler having a specific shape into this epoxy resin.

The present invention will now be described in detail.

## Detailed Description of the Preferred Embodiments

### (a) Epoxy Resin

The epoxy resin which is used as the basic component of the vibration-damping material is a diglycidyl ether or triglycidyl ether of a branched polyol having 3 to 20 carbon atoms or a polymer thereof. As specific examples, there can be mentioned diglycidyl ethers of polyol such as propylene glycol, dipropylene glycol, tripropylene glycol, polypropylene glycol, hydrogenated bisphenol A and neopentyl glycol, and polymers thereof, brominated products thereof, diglycidyl ethers of trimethylolpropane and propylene oxide adducts of trimethylolpropane, and triglycidyl ethers·thereof.

### (b) Solid Epoxy Resin

In the present invention, by incorporating a solid epoxy resin into the above-mentioned epoxy resin (a), an appropriate viscosity can be given to the resin portion without degradation of the vibration-damping performances, and the incorporation range of a plasticizer can be broadened and excellent vibration-damping performances can be manifested over a wide temperature range.

Various epoxy resins such as polyglycidyl ethers, polyglycidyl esters and alicyclic epoxy resins can be mentioned as the solid epoxy resin. For example, glycidyl ethers of bisphenol A (4,4'-dihydroxy diphenyl-2,2-propane), bisphenol F (4,4'-hydroxy diphenyl methane), bisphenol AD (4,4'-dihydroxy diphenyl ethane), phenol-novolak, cresol-novolak, glycidylamine and polyhydric phenol types and bromination products thereof can be used.

In the first aspect of the present invention, the solid epoxy resin is preferably used in an amount of up to 10% by weight based on the epoxy resin. In the second aspect of the present invention, the solid epoxy resin is preferably used in such an amount that the epoxy resin (a)/solid epoxy resin (b) weight ratio is from 1/0.1 to 1/5, preferably 1/0.3 to 1/3. In the second aspect of the present invention, by arranging the mixing ratio of the epoxy resins (a) and (b) within the above-mentioned range, an appropriate viscosity can be maintained without degradation of vibration-damping performances, and an excellent workability can be given to the vibration-damping material.

(c) Curing Agent

Almost all of known curing agents for epoxy resins can be used as the curing agent in the present invention. For example, amines, polyamide-amines, acid anhydrides, polyamides and dicyandiamides can be used.

More specifically, as the amine, there can be used N-aminoethylpiperazine, diethylenetriamine, triethylenetetraamine, trimethylhexamethylenediamine, isophoronediamine, metaxylylenediamine, metaphenylenediamine and diaminodiphenylmethane. As the acid anhydride, there can be used phthalic anhydride, trimellitic anhydride, methyltetrahydrophthalic anhydride, dodecenylsuccinic anhydride, ethylene-bis(anhydrotrimellittate) and maleic anhydride.

Among these curing agents, curing agents of the room temperature-curing type which are liquid at normal temperature, such as polyamine type curing agents and polyamideamine type curing agents, are preferably used.

The curing agent is used in such an amount that the amount of the functional group of the curing agent capable of reacting with the epoxy group of the epoxy resin is 0.6 to 1.4 equivalents, preferably 0.8 to 1.2 equivalents, per equivalent of the epoxy group.

(d) Plasticizer

In the second aspect of the present invention, by incorporation of a plasticizer, the vibration-damping performances of the vibration-damping material can be further increased.

Almost all of plasticizers customarily used for imparting a plasticity to epoxy resins or diluting epoxy resins can be used. Compositions comprising an aromatic hydrocarbon or modified aromatic hydrocarbon which has a high boiling point and is liquid or greasy at normal temperature, as the main component, and other appropriate plasticizer are preferably used because the vibration-damping performances are highly improved. Moreover, these plasticizers are advantageous in that the reactivity of the epoxy resin and the mechanical strength are not degraded.

As typical instances of the plasticizer, there can be mentioned aromatic alcohols, alkylphenols, lactones, furfuryl alcohol, phthalic acid esters, polyglycols, asphalt, coal tar, aromatic and aliphatic hydrocarbon resins (petrolium resin), natural hydrocarbon resins such as a terpene resin, coumarone-indene resins, xylene resins obtained by reaction of metaxylylene and formalin, modification products thereof, and phenol-modified polymers.

Among them, nonyl phenol, a xylene resin and a phenol-modified aromatic polymer are preferably used as the plasticizer. The foregoing plasticizers can be used in the form of mixtures of two or more of them.

In the first aspect of the present invention, the plasticizer is used in an amount of 0 to 300 parts by weight, preferably 10 to 150 parts by weight, especially preferably 10 to 100 parts by weight, per 100 parts by weight of the sum of the epoxy resin and curing agent.

In the second aspect of the present invention, the plasticizer is incorporated in an amount of 10 to 300 parts by weight, preferably 30 to 150 parts by weight, per 100 parts by weight of the sum of the epoxy resin (a), the solid epoxy resin (b) and the curing agent (c).

In each of the first and second aspects of the present invention, by adjusting the amount of the plasticizer within the above-mentioned range, reduction of the reactivity of the epoxy resin and the mechanical strength can be prevented and a good durability can be maintained in the vibration-damping material.

(e) Filler

In the first aspect of the present invention, at least one member selected from the group consisting of scaly fillers, particulate fillers and fibrous fillers is incorporated. In the second aspect of the present invention, a scaly filler, a particulate filler or a fibrous material is preferably used as the filler.

(Scaly Filler)

A scaly filler is incorporated for improving the modulus of elasticity of the material without degradation of the vibration-damping performances of the resin. As the scaly filler, there can be mentioned mica, graphite, alumina flake, glass flake, silicon carbide flake, steel flake and scaly iron oxide. Mica is especially preferably used because the price is low and the aspect ratio can be selected within a wide range.

(Particulate Filler)

A particulate filler is incorporated for increasing the workability and mechanical strength or controlling the density of the material. As specific examples of the particulate filler, there can be mentioned ferrite, calcium carbonate, silica, talc, clay aluminum powder, carbon, zinc oxide, sirasu balloon, silica balloon, glass balloon and phenolic resin balloon.

The particle size of the particulate filler is not particularly critical, but a particulate filler having a particle size of 0.1 to 100 $\mu$m is generally used.

(Fibrous Material)

The vibration-damping material of the present invention is used in the state of a liquid or paste. In the case where the vibration-damping material is a liquid material, the fibrous material is effective for preventing precipitation of the above-mentioned scaly filler and particulate filler, and in the case where the vibration-damping material is a pasty material, the fibrous material is effective for improving the adaptability to an operation of applying the vibration-damping material closely to a desired position and improving the mechanical strength without degradation of vibration-damping performances.

As the fibrous material, there can be mentioned asbestos, rock wool, an synthetic pulp of polyolefin, a fibrous magnesium compound, a potassium titanate fiber, an alumina fiber, a glass fiber, a polyamide fiber, a polyester fiber, an acrylic fiber, a carbon fiber, a polyvinyl alcohol fiber and a wooden pulp. Among these fibrous materials, an synthetic pulp of polyolefin, a fibrous magnesium compound and asbestos are preferably used.

The fiber length and fiber diameter of the fibrous material are not particularly critical. However, a fibrous material having an average fiber length of 1 to 100 $\mu$m and an average fiber diameter of 0.1 to 10 $\mu$m is generally used.

The amounts incorporated of the foregoing fillers will now be described.

In the first aspect of the present invention, the scaly filler is incorporated in an amount of 50 to 500 parts by weight, preferably 70 to 250 parts by weight, especially preferably 70 to 200 parts by weight, per 100 parts by weight of the sum of the epoxy resin and the curing agent. By adjusting the amount incorporated of the scaly filler within the above-mentioned range, degradation of the workability and flowability can be prevented and the modulus of elasticity of the material can be improved. The particulate filler is incorporated in an amount of 0.5 to 200 parts by weight, preferably 1 to 100 parts by weight, especially preferably 5 to 50 parts by weight, per 100 parts by weight of 100 parts by weight of the sum of the epoxy resin and the curing agent. By adjusting the amount incorporated of the particulate filler within the above-mentioned range, degradation of the work- and flowability can be prevented and the object of the incorporation is attained. The fibrous material is incorporated in an amount of 0.5 to 100 parts by weight, preferably 1 to 20 parts by weight, especially preferably 5 to 20 parts by weight, per 100 parts by weight of the sum of the epoxy resin and the curing agent. By adjusting the amount incorporated of the fibrous material within the above-mentioned range, degradation of the flowability of the vibration-damping material can be prevented and the object of the incorporation is attained.

In the second aspect of the present invention, the filler is incorporated in an amount of preferably 50 to 500 parts by weight, especially preferably 100 to 250 parts by weight, per 100 parts by weight of the sum of the components (a), (b) and (c). By adjusting the amount incorporated of the filler within the above-mentioned range, the elasticity or mechanical strength of the material can be increased to a practically satisfactory level, and the viscosity of the material can be maintained at an appropriate level without degradation of the workability or flowability of the material.

(Other Additives)

Known additives such as a flame retardant, a defoaming agent and a leveling agent can be added to the vibration-damping material of the present invention.

As the flame retardant, there can be mentioned antimony oxide, a halogenated aromatic compound, a halogenated aliphatic compound, magnesium hydroxide, aluminum hydroxide, boron oxide, a phosphoric acid ester, red phosphorus, aluminum hydroxide-stabilized red phosphorus, ferrocene, a ferrocene derivative and iron acetylacetate.

(Preparation of Composition)

The vibration-damping material of the present invention, which is composed of the above-mentioned composition, is mixed by using a mixer or the like, and the mixed composition is applied to a desired position of the vibration member and cured, whereby the intended purpose can be easily attained. The composition constituting the vibration-damping material can be obtained in the form of a liquid or a paste by appropriately adjusting the kinds and amounts of the components. In each case, the necessary components such as the filler, fibrous material and plasticizer are incorporated into one or both the epoxy resin and the curing agent, and just before the application, both are mixed at a predetermined mixing ratio by a mixer or the like.

In the case where the composition is a liquid state, the composition is directly coated to the surface of the vibration source, and in case where the composition is a paste state, the composition is applied to the vibration source, and allowed to stand still at room temperature or under heating for several hours to several days, whereby curing is completed. In the case where the vibration source (substrate) is a metal, it is preferred that the metal be subjected to a corrosion-preventing treatment in advance. In the case where casting, transfer molding or press molding of the composition is possible, the composition can be molded to a predetermined shape by casting into a mold, extrusion or press molding, or the composition is filled in a space defined by a metal or concrete and is then cured.

Furthermore, a topcoat of an epoxy resin type paint or an alkyd resin paint can be formed on the surface of the cured body, whereby the appearance, water resistance, oil resistance and weatherability can be improved.

In each case, the product obtained by curing the vibration-damping material of the present invention shows an excellent vibration-damping effect.

The present invention will now be described in detail with reference to the following examples and comparative examples.

Incidentally, in the examples and comparative examples, the vibration-damping performances were evaluated according to the following method.

(measurement Method)

An impedance head was attached to a central part of a test place, and vibrations (random waves) were given to the test piece by a vibrator and the bending vibration was measured. The measurement temperature was within the range of 10 to $60°$ C and the measurement was conducted at temperature intervals of $10°$ C. The measurement frequency was within the range of OHz to 6 KHz. The test piece and the vibrator were placed in a thermostat tank where the temperature was maintained at a constant level, and they were allowed to stand still for about 2 hours until the temperature of the test piece became stable. A signal having a force (F) and an acceleration (a) was put into an FFT analyzer from the impedance head to determine the transfer function (inertance). The loss coefficient ($\eta$) at each resonance frequency of the test piece was calculated from the half value width of the transmission function according to the following equation and the loss coefficient was converted to the damping coefficient ratio which was used for evaluation of the vibration-damping performances:

$\eta = \Delta$ f/fo

in which $\Delta$ f represents the resonance frequency and fo represents the transfer function.

Incidentally, the damping coefficient ratio is represented by the following formula:

Damping coefficient ratio (C/Cc) = $\eta/2$

Examples 1 through 6 and Comparative Example 1

A composition shown in Table 1, except the curing agent, was blended at room temperature ($24°$ C) for 15 minutes by using a universal mixing stirrer supplied by Sanei Seisakusho, and the curing agent was added to the mixture and the mixture was blended for 10 minutes.

The blended composition was cast on an iron plate having a size of 300 mm x 32 mm x 5 mm (thickness) placed in a mold having a size of 300 mm x 32 mm x 10 mm (thickness) and cured at room temperature for 24 hours to form a sheet having a size of 300 mm x 32 mm x 5 mm (thickness). Furthermore, heat curing was carried out at 80°C for 2 hours in a thermostat bath.

The vibration-damping performances of the obtained test piece were evaluated according to the above-mentioned measurement method.

The obtained results are shown in Table 1.

Table 1

| Composition (parts by weight) of Sample | Example No. | | | | | | Comparative Example No. |
|---|---|---|---|---|---|---|---|
| | 1 | 2 | 3 | 4 | 5 | 6 | 1 |
| hydrogenated bisphenol A diglycidyl ether[1] | 71.8 | | | | | | |
| neopentyl glycol diglycidyl ether [2] | | 58.3 | 58.3 | 58.3 | | 58.3 | |
| trimethylolpropane polyglycidyl ether[3] | | | | | 59.2 | | |
| 1,6-hexanediol diglycidyl ether[4] | | | | | | | 60 |
| polyamideamine curing agent[8] | 18.8 | 41.7 | 41.7 | 41.7 | 40.8 | 41.7 | 40 |
| modified aliphatic polyamine curing agent | 9.4 | | | | | | |
| phenol-modified aromatic polymer[5] | 40.2 | 11.7 | | | 29.6 | | |
| nonylphenol[6] | 20.1 | 5.8 | | | 14.8 | 6.6 | |
| xylene resin[7] | | | | | | 9.2 | |
| fibrous magnesium compound | 7.0 | 8.1 | 6.9 | 6.8 | 9.8 | 7.9 | 12 |
| ferrite | | | | 6.8 | 9.8 | | 12 |
| aluminum hydroxide | 33.8 | | | 20.3 | 29.5 | | 36 |
| mica | 93.0 | 109.5 | 93.1 | 40.8 | 56.2 | 107.9 | 36 |
| graphite | 39.8 | | | 44.2 | 61.2 | | 36 |

Vibration-Damping Performances

| | 1 | 2 | 3 | 4 | 5 | 6 | 1 |
|---|---|---|---|---|---|---|---|
| 500Hz (MAX C/Cc/temperature, °C) | 5.5/28 | 5.1/23 | 5.0/33 | 4.5/30 | 4.1/28 | 5.5/25 | 2.6/8 |
| 1000Hz (MAX C/Cc/temperature, °C) | 5.7/30 | 5.7/30 | 5.2/40 | 4.3/30 | 4.2/30 | 5.6/30 | 2.9/10 |
| 2000Hz (MAX C/Cc/temperature, °C) | 5.5/32 | 5.8/30 | 5.3/42 | 4.1/40 | 4.1/32 | 5.9/32 | 3.0/10 |
| 4000Hz (MAX C/Cc/temperature, °C) | 5.0/35 | 4.0/30 | 5.0/45 | 4.5/40 | 3.5/40 | 4.0/30 | 3.6/12 |

Note

*1: epoxy equivalent weight = 215

*2: epoxy equivalent weight = 140

*3: epoxy equivalent weight = 145

*4: epoxy equivalent weight = 150

*5: plasticizer

*6: plasticizer

*7: plasticizer

*8: Q-654 supplied by Mitsui Petrochemical Industries, Ltd.

Examples 7 through 11

In a composition shown in Table 2, except the curing agent, an epoxy resin (a) and a solid epoxy resin (b) were heat-melt-mixed at 100°C for 30 minutes by using a universal mixing stirrer supplied by Sanei Seisakusho.

The mixed epoxy resin was cooled to room temperature (24°C), and a plasticizer and a filler were added to the mixed epoxy resin and the mixture was blended for 15 minutes. Then, the curing agent was added to the mixture and the mixture was blended for 10 minutes.

The obtained composition was cast on an iron plate having a size of 300 mm x 32 mm x 5 mm (thickness) placed in a mold having a size of 300 mm x 32 mm x 10 mm (thickness) and cured at room temperature for 24 hours to form a sheet having a size of 300 mm x 32 mm x 5 mm (thickness). Furthermore, heat curing was carried out at 80°C for 2 hours in a thermostat bath.

The vibration-damping performances of the obtained test piece were evaluated according to the above-mentioned method.

The obtained results are shown in Table 2.

EP 0 407 157 A2

Table 2

| Composition (parts by weight) of Sample | Example No. | | | | |
|---|---|---|---|---|---|
| | 7 | 8 | 9 | 10 | 11 |
| neopentyl glycol diglycidyl ether*1 | 44.1 | 34.1 | 36.2 | . | 34.1 |
| trimethylolpropane polyglycidyl ether*2 | | | | 34.5 | |
| bisphenol A type solid epoxy resin*3 | 21.6 | 39.1 | 36.2 | 34.5 | 34.1 |
| polyamideamine curing agent*4 | 35.3 | 41.8 | 17.0 | 31.0 | 31.8 |
| modified aliphatic polyamine curing agent | | | 19.6 | | |
| phenol-modified aromatic polymer*5 | 23.0 | 22.8 | 20.3 | 62.1 | |
| nonylphenol*6 | 11.5 | 11.3 | 10.1 | 31.0 | 12.9 |
| xylene resin*7 | | | | | 17.9 |
| fibrous magnesium compound | 9.2 | 9.3 | 9.0 | 13.1 | 9.2 |
| mica | 106.5 | 106.2 | 92.7 | 153.0 | 103.3 |
| graphite | 18.8 | 18.8 | 39.7 | 27.0 | 18.3 |
| Vibration-Damping Performances | | | | | |
| 500Hz (MAX C/Cc/temperature, °C) | 5.6/30 | 5.6/40 | 6.1/30 | 5.2/19 | 5.5/38 |
| 1000Hz (MAX C/Cc/temperature, °C) | 5.2/32 | 5.9/43 | 5.9/32 | 5.3/20 | 5.8/42 |
| 2000Hz (MAX C/Cc/temperature, °C) | 5.0/35 | 5.5/42 | 5.9/35 | 5.0/23 | 5.6/42 |
| 4000Hz (MAX C/Cc/temperature, °C) | 4.5/36 | 4.9/43 | 5.6/42 | 4.5/27 | 5.0/40 |

Note

*1: epoxy equivalent weight = 140

*2: epoxy equivalent weight = 145

*3: epoxy equivalent weight = 475

*4: Q-654 supplied by Mitsui Petrochemical Industries, Ltd.

*5: plasticizer

*6: plasticizer

*7: plasticizer

As is apparent from the results of the foregoing examples, the vibration-damping material of the present invention can be applied and cast directly onto a frame, cover or part of a machine or equipment in which damping of vibrations is desired, for example, a motor of a machine or an engine of a vehicle such as an automobile, or onto a wall surface of a construction covering the above vibration source, and is then cured. Alternatively, the vibration material of the present invention is molded integrally with the above-mentioned vibration source, or the vibration-damping material is molded in advance and the moldings is bonded to the vibration source. Thus, excellent vibration-damping performances can be exerted by the vibration-damping material of the present invention.

This vibration-damping material is excellent in the vibration-damping performances, and especially in the case where a plasticizer is incorporated, a high damping value is obtained over a wide temperature range of, for example, 0 to 60°C, and an excellent vibration-damping capacity can be manifested at a low frequency of 0 to 5 KHz.

Moreover, the vibration-damping material of the present invention is excellent in such characteristics as workability, adhesion and durability.

## Claims

1. A vibration-damping composition which comprises (a) an epoxy resin which is a diglycidyl ether or triglycidyl ether of a branched polyol having 3 to 20 carbon atoms or of a polymer of a branched polyol having 3 to 20 carbon atoms and (b) a curing agent, the total amount of the epoxy resin (a) and curing agent (b) being 100 parts by weight, and which further comprises at least one filler selected from 50 to 500 parts by weight of a scaly filler, 0.5 to 200 parts by weight of a particulate filler and 0.5 to 100 parts by weight of a fibrous material.

2. A composition according to claim 1 comprising a scaly filler and optionally at least one particulate filler or fibrous material.

3. A composition according to claim 1 or claim 2 comprising up to 300 parts by weight, per 100 parts by weight of the sum of the epoxy resin and the curing agent, of a plasticiser.

4. A composition according to any one of claims 1 to 3, further comprising up to 10% by weight, based on the weight of the epoxy resin, of a solid epoxy resin.

5. A vibration-damping composition which comprises (a) an epoxy resin which is a diglycidyl ether or triglycidyl ether of a branched polyol having 3 to 20 carbon atoms or a polymer thereof, (b) a solid epoxy resin, (c) a curing agent, (d) a plasticizer and (e) a filler.

6. A composition according to claim 5, wherein the weight ratio of the epoxy resin (a) to the solid epoxy resin (b) is from 1/0.1 to 1/5.

7. A composition according to claim 5 or claim 6 comprising 0.6 to 1.4 equivalents of the functional group of the curing agent (c) capable of reacting with the epoxy group of the epoxy resin (a) per equivalent of the epoxy group of the epoxy resin (a).

8. A composition according to any one of claims 5 to 7 comprising 10 to 300 parts by weight, per 100 parts by weight of the sum of the epoxy resin (a), the solid epoxy resin (b) and the curing agent (c), of plasticizer (d) and 50 to 500 parts by weight, per 100 parts by weight of the sum of the epoxy resin (a) the solid epoxy resin (b) and the curing agent (c), of the filler (e). ·

9. A vibration-damping material which is the cured product of a vibration-damping composition according to any one of claims 1 to 8.

10. A process for damping vibration of a substrate comprising applying a vibration-damping composition according to any one of claims 1 to 9 to the substrate and curing the composition.